# EUROPEAN PATENT APPLICATION

(11) **EP 4 617 622 A1**
(43) Date of publication of application: **17.09.2025**
(21) Application number: 23888762.4
(22) Date of filing: 09.11.2023
(51) Int. Cl.: G01C 15/00, B25H 7/04, E04G 21/18, G01C 15/02, G05D 1/43

(54) **AUTOMATIC MARKING SYSTEM AND AUTOMATIC MARKING METHOD**

(30) Priority: 11.11.2022 JP 2022181226
(71) Applicant: KAJIMA CORPORATION, Tokyo 107-8388 (JP); Tamadic Co., Ltd., Tokyo 160-0022 (JP); Roboshin Ltd., Nagoya city, Aichi 461-0025 (JP)
(72) Inventor: MIZUTANI, Ryo, Tokyo 107-8388 (JP); MITANI, Satoshi, Tokyo 107-8388 (JP); HASEGAWA, Yoshihide, Tokyo 107-8388 (JP); KATO, Yosuke, Tokyo 107-8388 (JP); OOMORI, Haruka, Tokyo 160-0022 (JP); OSHIDA, Kenichi, Tokyo 160-0022 (JP); KURIKI, Hideharu, Tokyo 160-0022 (JP); HIRANO, Shinya, Nagoya city, Aichi 461-0025 (JP)
(74) Representative: Grünecker Patent- und Rechtsanwälte PartG mbB
(86) International application number: PCT/JP2023/040379
(87) International publication number: WO 2024/101417

(57) **Abstract**

In an automatic marking system (100) comprising: a marking device (10) configured to perform the marking while moving; a three-dimensional measurement device (50) capable of measuring a three-dimensional spatial position of the marking device (10); and a control device (30) configured to control traveling and the marking by the marking device (10), the marking device (10) has: a traveling unit (12) capable of traveling on a marking surface; a marking unit (18) configured to perform the marking to the marking surface; and a target unit (20) configured to be tracked by the three-dimensional measurement device (50), the traveling unit (12) has a plurality of omnidirectional traveling wheels whose rotation direction and rotation speed are controlled independently, and the control device (30) is configured to control rotation of each of the plurality of omnidirectional traveling wheels such that the marking unit (18) is positioned at a preset target marking position without changing a facing direction of the marking device (10).

## Description

### TECHNICAL FIELD

The present invention relates to an automatic marking system and an automatic marking method.

### BACKGROUND ART

JP2019-2849A discloses an automatic marking system including a marking robot that performs marking to a marking surface.

### SUMMARY OF INVENTION

The automatic marking system described in JP2019-2849A moves the marking robot to a designated target point and creates markings by stamping at the target point. Therefore, for a marking line connecting the markings together, a site worker is required to separately perform a marking operation, and so, the site worker's workload has not been sufficiently reduced.

An object of the present invention is to provide an automatic marking system capable of automatically performing marking to a marking surface.

According to one aspect of the present invention, an automatic marking system includes: a marking device configured to perform a marking to a marking surface while moving; a three-dimensional measurement device capable of tracking the marking device and measuring a three-dimensional spatial position of the marking device; and a control device configured to control traveling and the marking by the marking device based on the three-dimensional spatial position of the marking device measured by the three-dimensional measurement device, wherein the marking device has: a traveling unit capable of traveling on the marking surface; a marking unit configured to perform the marking to the marking surface; and a target unit configured to be tracked by the three-dimensional measurement device, the traveling unit has a plurality of omnidirectional traveling wheels whose rotation direction and rotation speed are controlled independently, and the control device is configured to control rotation of each of the plurality of the omnidirectional traveling wheels such that the marking unit is positioned at a preset target marking position without changing a facing direction of the marking device.

According to another aspect of the present invention, an automatic marking method performed by an automatic marking system including: a marking device configured to perform a marking to a marking surface while moving; a three-dimensional measurement device capable of tracking the marking device and measuring a three-dimensional spatial position of the marking device; and a control device configured to control traveling and the marking by the marking device based on the three-dimensional spatial position of the marking device measured by the three-dimensional measurement device, includes moving the marking device such that a marking unit of the marking device is positioned at a preset target marking position without changing a facing direction of the marking device by controlling a traveling unit of the marking device having a plurality of omnidirectional traveling wheels whose rotation direction and rotation speed are controlled independently.

### BRIEF DESCRIPTION OF DRAWINGS

[FIG. 1] FIG. 1 is a conceptual diagram showing a conceptual image of a marking operation performed by an automatic marking system according to an embodiment of the present invention.
[FIG. 2] FIG. 2 is a plan view showing a schematic configuration of a marking device of the automatic marking system according to the embodiment of the present invention.
[FIG. 3] FIG. 3 is a block diagram showing an overall configuration of the automatic marking system according to the embodiment of the present invention.
[FIG. 4] FIG. 4 is a diagram for explaining draw data.
[FIG. 5] FIG. 5 is a flowchart showing procedure of the marking operation that is performed by the automatic marking system according to the embodiment of the present invention.
[FIG. 6] FIG. 6 is a diagram for explaining a method for recognizing an orientation of the marking device.
[FIG. 7] FIG. 7 is a diagram for explaining an orientation of the marking device when performing marking.
[FIG. 8A] FIG. 8A is a diagram for explaining movement of the marking device to a target marking position.
[FIG. 8B] FIG. 8B is a diagram for explaining the movement of the marking device to the target marking position.
[FIG. 9A] FIG. 9A is a diagram for explaining a method for adjusting a position of the marking device relative to the target marking position.
[FIG. 9B] FIG. 9B is a diagram for explaining the method for adjusting the position of the marking device relative to the target marking position.
[FIG. 10] FIG. 10 is a diagram for explaining offset in the draw data.

### DESCRIPTION OF EMBODIMENTS

In the following, an automatic marking system and an automatic marking method according to an embodiment of the present invention will be described with reference to the drawings.

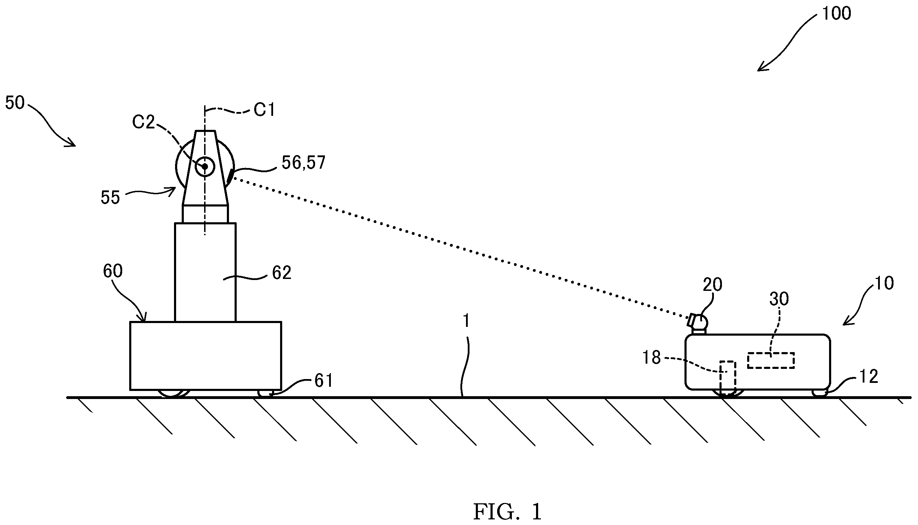

An automatic marking system 100 according to the embodiment of the present invention is a system for automatically marking a marking line, etc. serving as a reference for the construction on a floor surface of a building, and as shown in FIG. 1, the automatic marking system 100 includes: a marking device 10 that performs the marking to a floor surface 1 serving as a marking surface while moving; a three-dimensional measurement device 50 capable of tracking the marking device 10 and measuring a three-dimensional spatial position of the marking device 10; and a control device 30 that controls travel and the marking of the marking device 10 on the basis of the three-dimensional spatial position of the marking device 10 measured by the three-dimensional measurement device 50. It should be noted that, in the following, although the description will be given of a case in which the control device 30 is built into the marking device 10, the control device 30 may be built into the three-dimensional measurement device 50, or the control device 30 may be provided separately from the marking device 10 and the three-dimensional measurement device 50.

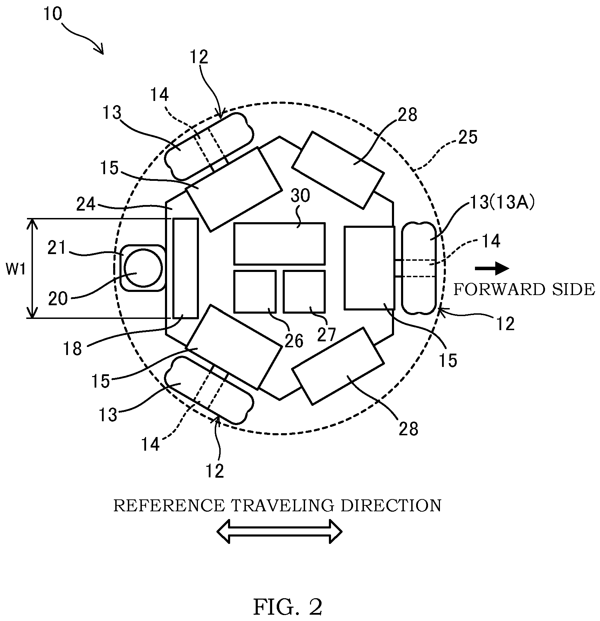

The marking device 10 is an autonomous traveling robot that does not require any external operation, and as shown in FIG. 2, the marking device 10 includes: a traveling unit 12 for traveling on the floor surface 1 serving as the marking surface; a marking unit 18 that performs the marking to the floor surface 1; a target unit 20 that is tracked by the three-dimensional measurement device 50; and a base unit 24 to which the traveling unit 12, the marking unit 18, and the target unit 20 are attached. FIG. 2 is a plan view of the marking device 10 as seen from above and shows a state in which a cover member 25, which is to be attached to the base unit 24 so as to cover the traveling unit 12 and the marking unit 18, is removed.

The traveling unit 12 has three omni wheels 13 (omnidirectional traveling wheels), whose rotation direction and rotation speed are each independently controlled. Each of the omni wheels 13 is rotationally driven by an electric motor 15 via an axle 14. It should be noted that, the axle 14 and the electric motor 15 may be linked via a speed reducer (not shown).

The three omni wheels 13 are arranged at equal intervals (120° intervals) on the circumference of a common circle, and the respective axial directions of their axles 14 are pointed to the center of the common circle. In other words, the three omni wheels 13 are arranged such that the axial directions of their axles 14 are pointed to a common center point.

The rotation direction and the rotation speed of each electric motors 15 are controlled by the control device 30 independently. In other words, the rotation direction and the rotation speed of each of the respective three omni wheels 13 are controlled independently.

It should be noted that, the traveling unit 12 may have four omni wheels 13. Also in this case, the four omni wheels 13 are arranged at equal intervals (90° intervals) on the circumference of a common circle such that the respective axial directions of the respective axles 14 are pointed to the common center point. However, in a case in which the four omni wheels 13 are arranged, if the floor surface 1 is not flat and there are irregularities, there is a risk in that one of the omni wheels 13 does not come into contact with the floor surface 1 and a traveling stability thereof is deteriorated, and so, it is preferable that the number of the omni wheels 13 be three.

In addition, the omnidirectional traveling wheel of the traveling unit 12 is not limited to the omni wheel 13, and it may be possible to employ any configuration as long as the omnidirectional traveling wheel is a wheel that allows movement of the marking device 10 in the axial direction of the axle 14, and it may be, for example, Mecanum wheel, Mobius wheel, and so forth.

By employing a configuration in which the plurality of omnidirectional traveling wheels are provided for the traveling unit 12 as described above, the marking device 10 can move smoothly in all directions without turning.

The marking unit 18 is an inkjet-type printing device having a predetermined markable width W1 and has a nozzle head (not shown), in which a plurality of nozzles capable of ejecting ink onto the floor surface 1 are provided at predetermined minute intervals, and an ink supply unit (not shown) that supplies the ink to the nozzle head. The nozzle head is attached to the base unit 24 such that the plurality of nozzles are aligned along a direction of the markable width W1.

Therefore, when the marking device 10 is controlled to travel in the direction orthogonal to the markable width W1 direction, the marking device 10 can freely draw characters and lines within a range of the markable width W1. It should be noted that, even when the marking device 10 is controlled to travel in the same direction as the markable width W1 direction, by ejecting the ink from the nozzle at relatively high speed, it is possible to draw a line along the moving direction of the marking device 10. In addition, by arranging a plurality of nozzle heads along the markable width W1 direction, it is also possible to expand the markable width W1 as required.

The marking device 10 is capable of freely moving in all directions as described above and does not have a specific concept of "the forward side". However, in the following, for the sake of explanation, the traveling direction that is substantially orthogonal to the markable width W1 direction, in which the characters and lines can be freely drawn on the floor surface 1 by the marking unit 18 as described above, is referred to as a reference traveling direction of the marking device 10. In addition, the side of a first omni wheel 13A (the right side in FIG. 2) whose axle 14 is not rotated when the marking device 10 is controlled to travel in the reference traveling direction is defined as "the forward side" of the marking device 10, and the first omni wheel 13A that is arranged on the forward side is defined as "a steerable wheel" that is used for steering of the marking device 10 in the moving direction. It should be noted that, the definition of "the forward side" of the marking device 10 is not limited to the above description.

The target unit 20 is a directional prism capable of reflecting the laser light emitted from the three-dimensional measurement device 50 and is rotated by a target rotation unit 21 so as to constantly face the three-dimensional measurement device 50. The target rotation unit 21 is a servomotor, and the rotation angle thereof is controlled by the control device 30 as described later. It should be noted that, the target unit 20 may also be a 360° prism, and in such a case, the target rotation unit 21 may not be provided.

In addition to the traveling unit 12, the marking unit 18 and the target unit 20 described above, the base unit 24 of the marking device 10 includes: an orientation detection unit 26 capable of detecting the orientation of the marking device 10 while it is traveling; a communication unit 27 that transmits and receives data to and from the three-dimensional measurement device 50 and an external server 120; and batteries 28 that supply power to the traveling unit 12 and other electrical components. In addition, the control device 30 is also installed on the base unit 24.

The orientation detection unit 26 is a so-called an inertial measurement unit (IMU) in which an acceleration sensor, a gyro sensor, and a geomagnetic sensor capable of detecting the orientation of the marking device 10 are integrated. For example, the orientation detection unit 26 can detect which direction "the forward side" of the marking device 10 is facing relative to the direction in which the marking device 10 is traveling, in other words, how much the markable width W1 direction is tilted relative to the traveling direction of the marking device 10.

The communication unit 27 is a short-range wireless communication device such as BLE (Bluetooth^{®} Low Energy) or Wi-Fi^{®} and is mainly used to transmit and receive data to and from the three-dimensional measurement device 50. It should be noted that, the communication unit 27 may include a general wireless communication device capable of transmitting and receiving data via the internet connection.

As shown in FIG. 1, the three-dimensional measurement device 50 includes: a carriage unit 60 capable of moving on the floor surface 1 serving as the marking surface; and an optical measuring unit 55 capable of measuring the three-dimensional spatial position of the target unit 20 on the basis of the reflected light of the laser light irradiated onto the target unit 20.

Similarly to the traveling unit 12 of the marking device 10, the carriage unit 60 has: three omni wheels 61; motors (not shown) that are respectively provided for the omni wheels 61; and a battery (not shown) that supplies power to the motors. With such a configuration, similarly to the marking device 10, the three-dimensional measurement device 50 can move smoothly in all directions without turning.

It should be noted that, the carriage unit 60 may have four omni wheels 61. In addition, the wheel of the carriage unit 60 is not limited to the omni wheel 61, and it may be Mecanum wheel, Mobius wheel, and so forth. In addition, because the carriage unit 60 is not required to be moved as frequently as the marking device 10, the carriage unit 60 may be a general traveling device capable of self-traveling forward, backward, left, and right and moving to a predetermined position.

In addition, the carriage unit 60 is provided with an installation platform 62 for installing the optical measuring unit 55 onto the carriage unit 60. It should be noted that, although the installation platform 62 shown in FIG. 1 has a simple columnar structure, the installation platform 62 may be configured so as to be extendable and contractable in the vertical direction.

The optical measuring unit 55 has a light emitting unit 56 that emits the laser light and a light receiving unit 57 that is provided at the same position as the light emitting unit 56 and receives the reflected laser light, and the optical measuring unit 55 is a three-dimensional coordinate surveying instrument, such as a so-called a laser tracker or a tracking total station, capable of, based on the time from the laser light is emitted towards a measurement target object, such as the target unit 20, etc., until the reflected laser light is received, measuring the distance to the measurement target object, thereby measuring the three-dimensional spatial position coordinate of the measurement target object.

The light emitting unit 56 and the light receiving unit 57 are configured so as to be rotatable in the horizontal direction about a vertical axis C1 and so as to be pivotable in the vertical direction about the horizontal axis C2. With such a configuration, the optical measuring unit 55 is configured so as to be able to constantly receive the laser light reflected by the target unit 20 at the light receiving unit 57 even when the target unit 20 is moved, in other words, the optical measuring unit 55 is configured so as to be able to track the target unit 20. It should be noted that, in order to improve the followability with respect to the target unit 20, a camera may also be provided.

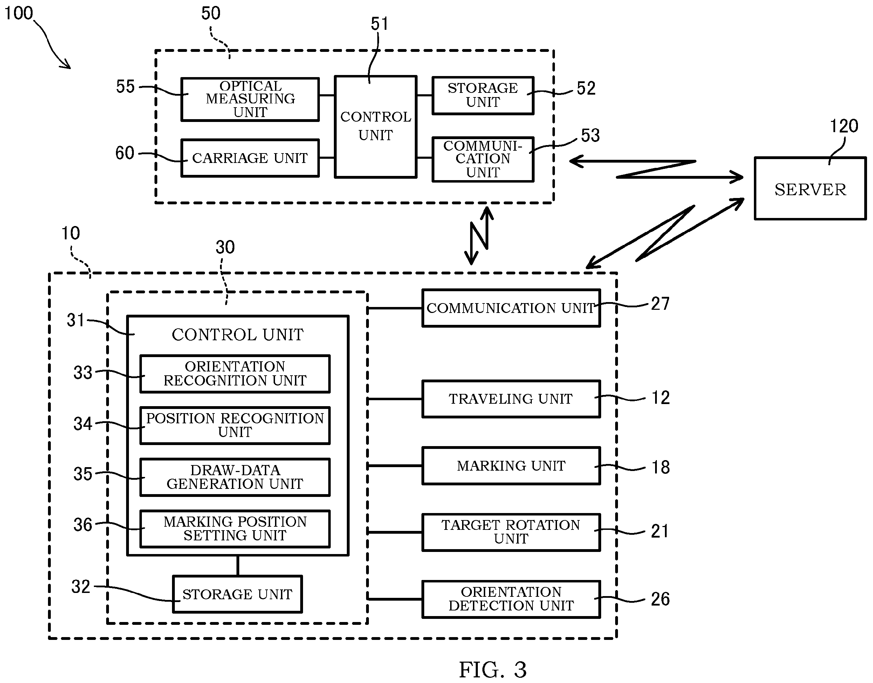

In addition, as shown in FIG. 3, the three-dimensional measurement device 50 has: a microcomputer including a Central Processing Unit (CPU) serving as a control unit 51, a Read Only Memory (ROM) and a Random Access Memory (RAM) serving as a storage unit 52, and an input/output interface (I/O interface); and a communication unit 53 that transmits and receives data to and from the marking device 10 and the external server 120.

On the basis of commands from the control device 30, the control unit 51 controls the operation of the carriage unit 60 and the optical measuring unit 55, and transmits a measurement value measured by the optical measuring unit 55 to the marking device 10 and the external server 120 via the communication unit 53.

In the storage unit 52, a control program, etc. executed by the control unit 51 is stored in advance, and the measurement value measured by the optical measuring unit 55 and the data obtained from the external server 120, etc. via the communication unit 53 are stored.

The communication unit 53 is a short-range wireless communication device similar to the communication unit 27 of the marking device 10 and is mainly used for transmitting and receiving data with the marking device 10. It should be noted that, the communication unit 53 may be provided with a general wireless communication device capable of transmitting and receiving the data via the internet connection.

The three-dimensional measurement device 50 configured as described above tracks, by means of the optical measuring unit 55, the target unit 20 that is moved with the travel of the marking device 10, and measures the three-dimensional spatial position (the position coordinate) of the target unit 20 within the space in which the marking is to be performed.

The optical measuring unit 55 automatically identifies its own position in the space, in which the marking is to be performed, by measuring the distances and angles to a plurality of reference prisms, which are arranged in advance in the space. In addition, the optical measuring unit 55 automatically updates its own position each time the three-dimensional measurement device 50 is moved and stopped. As described above, because the optical measuring unit 55 is always grasping its own position coordinate in the space, in which the marking is to be performed, it is possible to continuously measure the three-dimensional spatial position coordinate of the target unit 20 in the space, in which the marking is to be performed.

It should be noted that, from the three-dimensional measurement device 50, the position coordinate of the target unit 20 in a coordinate system set in advance may be transmitted to the control device 30, or the data, such as the distance, the angle, and so forth, required for calculating the position coordinate of the target unit 20 may be transmitted to the control device 30. In addition, a depression angle and a turning angle of the optical measuring unit 55 required to control the rotation angle of the target rotation unit 21 are transmitted from the three-dimensional measurement device 50 to the control device 30.

On the basis of the three-dimensional spatial position of the marking device 10 measured by the three-dimensional measurement device 50 and the design data loaded in advance, the control device 30 controls the operation of the traveling unit 12 and the marking unit 18 of the marking device 10. The specific control performed by the control device 30 will be described in detail in the explanation of an automatic marking method for automatically performing the marking to the floor surface 1, which will be described later.

As shown in FIG. 3, the control device 30 is a microcomputer including a Central Processing Unit (CPU) serving as a control unit 31, a Read Only Memory (ROM) and a Random Access Memory (RAM) serving as a storage unit 32, and an input/output interface (I/O interface).

The control unit 31 has: an orientation recognition unit 33 that recognizes the orientation of the marking device 10; a position recognition unit 34 that recognizes the three-dimensional spatial position of the marking device 10; a draw-data generation unit 35 that generates the draw data from the design data; and a marking position setting unit 36 that sets a target marking position on the basis of the draw data. It should be noted that, these components such as the orientation recognition unit 33 indicate the respective functions of the control unit 31 as virtual units, and do not necessarily mean that they physically exist. In addition, the above-described functions are a part of the controls executed by the control unit 31, and the control unit 31 also executes a control related to functions other than these functions as needed.

The orientation recognition unit 33 recognizes which direction "the forward side" of the marking device 10 is facing while it is traveling, on the basis of the detection value from the orientation detection unit 26, which is capable of detecting the orientation of the marking device 10.

Here, although the three-dimensional spatial position of the target unit 20 of the marking device 10 is measured by the three-dimensional measurement device 50, the marking unit 18, which performs the marking to the floor surface 1, is arranged in the marking device 10 at the position separated by a predetermined distance from the position where the target unit 20 is provided. Therefore, in order to identify the three-dimensional spatial position of the marking unit 18, it is required to grasp which direction "the forward side" of the marking device 10 is facing relative to the target unit 20, whose three-dimensional spatial position has been identified, as a reference.

Thus, in the orientation recognition unit 33, on the basis of the detection value detected by the orientation detection unit 26, the orientation of the marking device 10 is constantly recognized by means of known Dead Reckoning (DR). It should be noted that, the initial orientation before the marking device 10 starts the marking operation is recognized in an orientation recognition step, which will be described later.

The orientation of the marking device 10 constantly recognized by the orientation recognition unit 33 as described above is used by the position recognition unit 34, which recognizes the three-dimensional spatial position of the marking device 10 in the space, in which the marking is to be performed, together with the three-dimensional spatial position of the target unit 20 measured by the three-dimensional measurement device 50. The position recognition unit 34 determines, on the basis of the three-dimensional spatial position of the target unit 20 and the orientation of the marking device 10, three-dimensional spatial position coordinate of the marking unit 18 that performs the marking to the floor surface 1.

In addition, although the data regarding locations where the marking is to be performed is included in the design data that is transmitted in advance to the control device 30 from the external server 120, etc. and stored in the storage unit 32, the data is not prepared in consideration of the efficiency, etc. of the marking operation performed by the marking device 10, and so, if an attempt is made to perform the marking strictly in accordance with the design data, there may be a case in which the work time becomes longer.

Thus, the draw-data generation unit 35 converts the design data into the draw data suitable for the marking performed by the marking device 10.

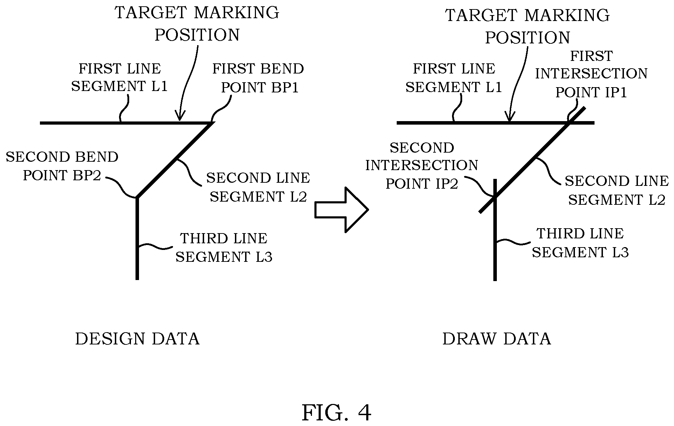

Specifically, for example, in order to accurately draw a zigzag line as shown on the left side in FIG. 4, the traveling direction of the marking device 10 needs to be changed after temporarily stopping the marking device 10 at each of the bend points BP1 and BP2 by sufficiently decelerating the marking device 10 before it reaches each of bend points BP1 and BP2. However, it is difficult to temporarily stop the marking device 10 in a state in which the marking unit 18 of the marking device 10 is precisely positioned at each of the bend points BP1 and BP2, and there is a risk in that the positions of apexes of the zigzag line drawn by the marking are deviated from the positions of the bend points BP1 and BP2 as designed.

On the other hand, it is relatively easy to accurately mark a line segment of a predetermined length by the marking device 10.

Therefore, in a case in which the design data includes the zigzag line with the bend points BP1 and BP2 as shown on the left side in FIG. 4, it is preferable to generate the draw data, as shown on the right side of FIG. 4, by respectively extending two line segments L1 and L2 that form the zigzag line at a first bend point BP1 to convert the first bend point BP1 into a first intersection point IP1 where the two line segments L1 and L2 intersect, and by respectively extending two line segments L2 and L3 that form the zigzag line at a second bend point BP2 to convert the second bend point BP2 into a second intersection point IP2 where the two line segments L2 and L3 intersect.

By ensuring that no zigzag line is included in the draw data generated by the draw-data generation unit 35 as described above, it is possible to improve the work efficiency of the marking and also to substantially coincide the positions of the intersection points drawn by the marking with the positions of the bend points BP1 and BP2 as designed. The draw data generated from the design data by the draw-data generation unit 35 is stored in the storage unit 32.

On the basis of the draw data that is generated by the draw-data generation unit 35 as described above, the marking position setting unit 36 sets the target marking position (the target position coordinate) at which the marking unit 18 of the marking device 10 performs the marking. The marking device 10 is controlled by the control device 30 such that the marking unit 18 travels by tracking the target marking position set by the marking position setting unit 36. In other words, the control device 30 controls the traveling unit 12 of the marking device 10 such that the target marking position (the target position coordinate) set by the marking position setting unit 36 always coincides with the three-dimensional spatial position coordinate of the marking unit 18 determined by the position recognition unit 34.

In addition, when the target unit 20 is not facing the optical measuring unit 55 side, the three-dimensional measurement device 50 cannot measure the three-dimensional spatial position of the target unit 20, and as a result, it becomes impossible to control the marking device 10 to travel along the target marking position.

Therefore, the control unit 31 controls the rotation angle of the target rotation unit 21 such that the target unit 20 is always facing towards the optical measuring unit 55 side on the basis of the angle data of the optical measuring unit 55 that is transmitted from the three-dimensional measurement device 50.

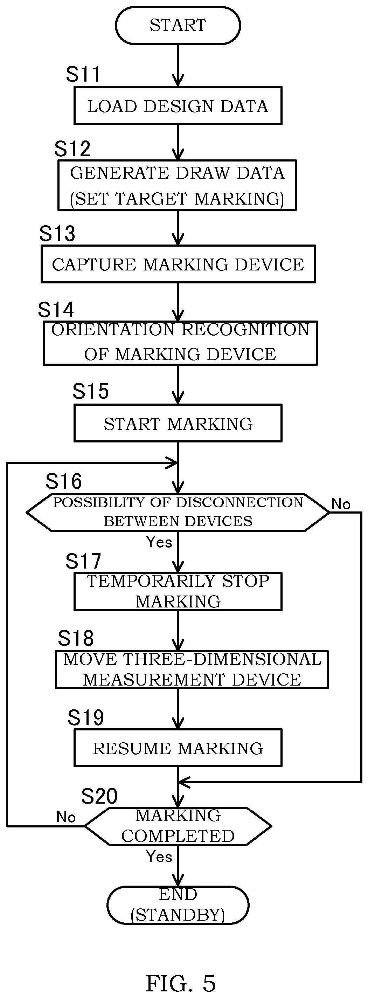

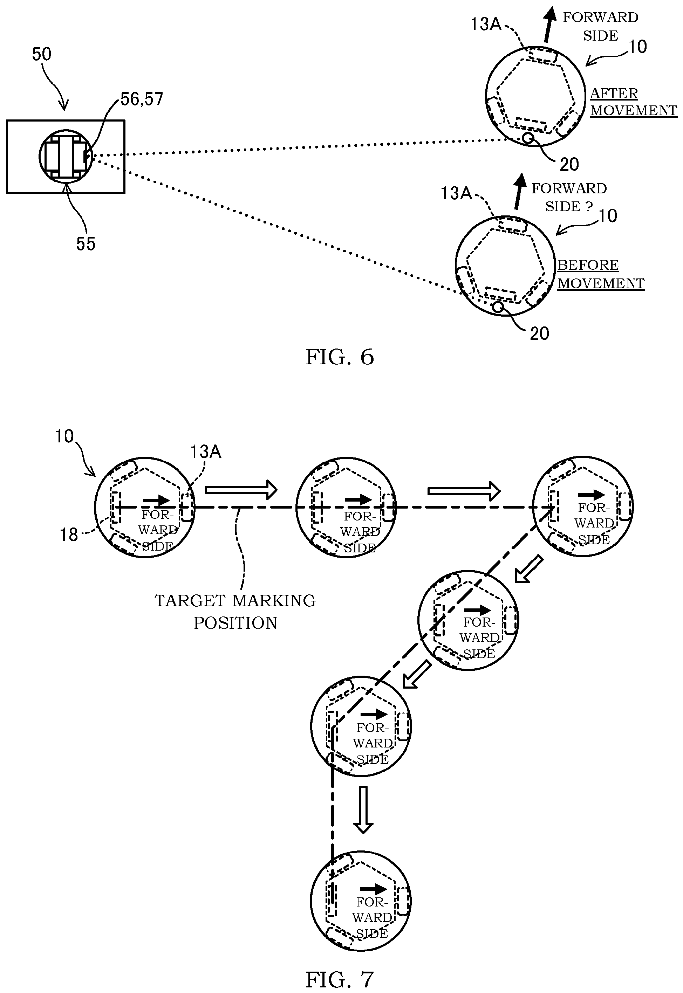

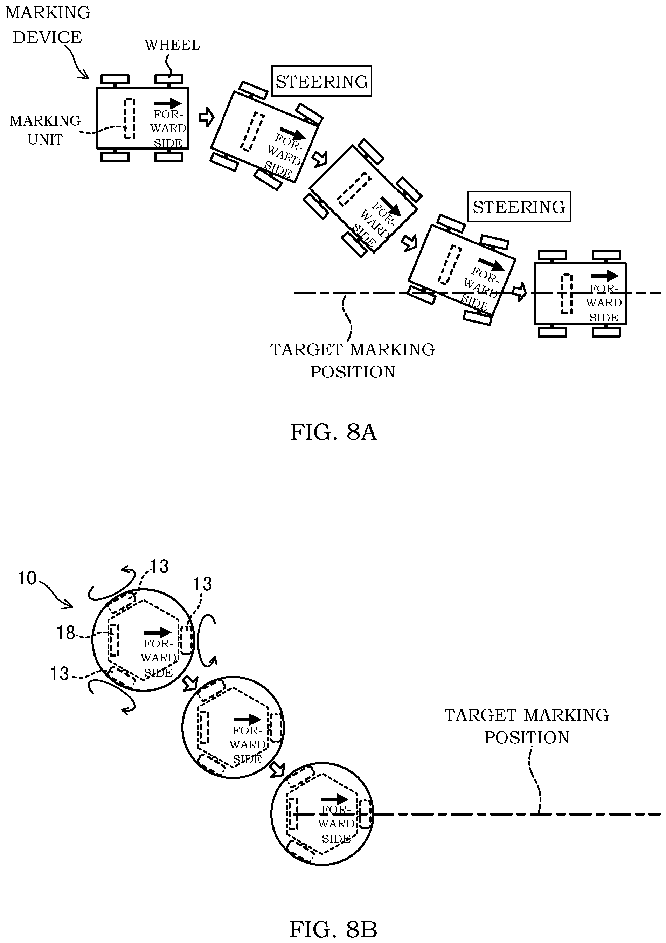

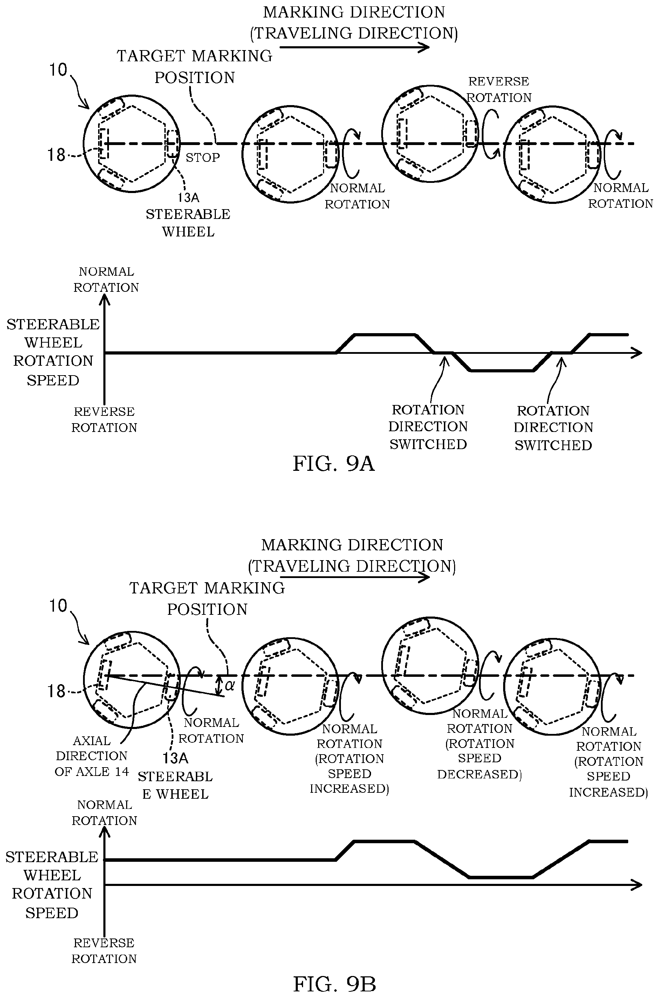

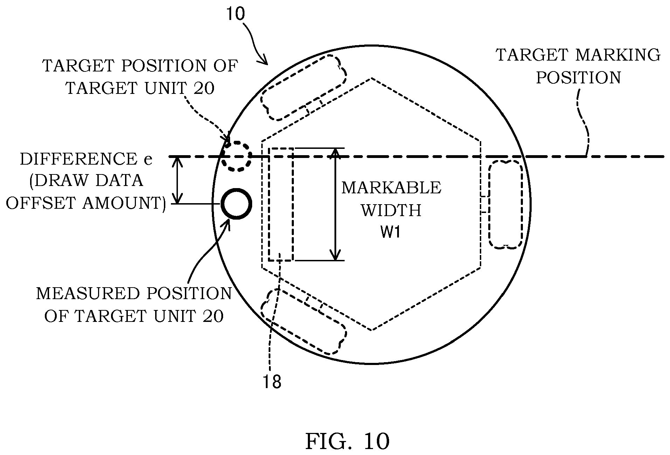

Next, the automatic marking method for automatically performing the marking to the floor surface 1 by the automatic marking system 100 having the above-described configuration will be described with reference to FIGs. 5 to 9. FIG. 5 is a flowchart showing the procedure in which the automatic marking system 100 automatically performs the marking operation, FIG. 6 is a diagram for explaining a method for recognizing the orientation of the marking device 10, and FIG. 7 is a diagram for explaining the orientation of the marking device 10 when the marking is performed. In addition, FIGs. 8A and 8B are diagrams for explaining the movement of the marking device 10 to the target marking position, FIGs. 9A and 9B are diagrams for explaining a method of adjusting the position of the marking device 10 relative to the target marking position, and FIG. 10 is a diagram for explaining the offset in the draw data.

First, in step S11, the control device 30 loads the design data of the space in which the marking operation is to be performed, such as a Building Information Modeling (BIM), etc., from the external server 120, etc. The design data loaded here includes data regarding locations where the marking is to be performed. It should be noted that, the design data may be stored in advance in the storage unit 32 of the control device 30.

Next, in step S12, the control device 30 generates the draw data from the design data loaded in step S11 by means of the draw-data generation unit 35. Then, on the basis of the generated draw data, the target marking position (the target position coordinate) in which the marking is to be performed by the marking unit 18 of the marking device 10 is then set by the marking position setting unit 36.

When the target marking position is set in step S12, in the subsequent step S13, the marking device 10 is captured by the three-dimensional measurement device 50. Specifically, the three-dimensional spatial position (the position coordinate) of the target unit 20 of the marking device 10 is measured by the optical measuring unit 55 of the three-dimensional measurement device 50.

At this point, the orientation of the marking device 10, in other words, which direction "the forward side" of the marking device 10 is facing relative to the target unit 20, whose three-dimensional spatial position has been identified, as the reference, is still unknown.

Therefore, in the subsequent step S14, in the orientation recognition unit 33 of the control device 30, the recognition of the orientation of the marking device 10 is performed (the orientation recognition step).

Specifically, as shown in FIG. 6, the marking device 10 is moved by a predetermined distance in the preset direction, for example, in the direction, which is defined as "the forward side" for the marking device 10, from the position at which the marking device 10 is captured by the three-dimensional measurement device 50 in step S13, in other words, the position at which it is still unknown which direction "the forward side" of the marking device 10 is facing.

For example, it is possible to move the marking device 10 in the direction defined as "the forward side" without rotationally driving the first omni wheel 13A that is arranged in the direction defined as "the forward side" by the electric motor 15 and by rotationally driving other two omni wheels 13 at the same rotation speed towards the first omni wheel 13A.

The direction, in which the marking device 10 has moved, as determined from the difference between the position coordinate of the target unit 20, which is received by the control device 30 from the three-dimensional measurement device 50 before the marking device 10 is moved, and the position coordinate of the target unit 20, which is received by the control device 30 from the three-dimensional measurement device 50 after the marking device 10 is moved, is then recognized by the orientation recognition unit 33 as "the forward side" of the marking device 10 at the current moment. In addition, the direction detected by the orientation detection unit 26 at this time is set as "the forward side" of the marking device 10, and thereafter, this is used as a reference for determining the orientation of the marking device 10.

As a result, it is possible to recognize which direction "the forward side" of the marking device 10 is facing at the current moment in the space, in which the marking is to be performed, and it also becomes possible to estimate subsequent changes in the orientation of the marking device 10 on the basis of the detection value detected by the orientation detection unit 26. It should be noted that, the method for recognizing the initial orientation of the marking device 10 is not limited to the above-described method, and any method may be employed as long as it is a method for identifying the initial orientation on the basis of the difference in the position coordinates of the target unit 20 measured before and after moving the marking device 10 in a predetermined direction.

By grasping the orientation (the facing direction) of the marking device 10 as described above, it becomes possible to determine the three-dimensional coordinate of the marking unit 18 on the basis of the three-dimensional coordinate of the target unit 20 measured by the three-dimensional measurement device 50. In other words, a state in which the marking unit 18 can be moved along the target marking position set in step S12 is achieved.

Therefore, in the subsequent step S15, the marking performed by the marking device 10 is started.

Specifically, as shown in FIG. 7, the traveling unit 12 of the marking device 10 is controlled by the control device 30 such that the marking unit 18 is positioned so as to track the target marking position set in step S12.

As described above, the traveling unit 12 of the marking device 10 has a configuration in which the plurality of omni wheels 13 (the omnidirectional traveling wheels) are provided, and the marking device 10 can move smoothly in all directions without turning. Therefore, as shown in FIG. 7, even if there is a portion that bends at an acute angle or an obtuse angle at the target marking position, the marking device 10 can perform the marking by traveling in a state in which the side defined as "the forward side" is always facing the same direction without performing any turning or reversing maneuvers.

As described above, in the marking device 10, the rotation of each of the plurality of omni wheels 13 is controlled by the control device 30 such that the marking unit 18 is positioned at the preset target marking position without changing the orientation (the facing direction) of the marking device 10. In other words, in the process of performing the marking, because the marking device 10 does not turn to change its facing direction or perform a reversing maneuver to change its facing direction, the time required for the marking operation is reduced, and as a result, it is possible to automatically perform the marking to the floor surface 1 efficiently. It should be noted that, although FIG. 7 shows a case in which the target marking position is a linear shape, the target marking position may be a curved shape.

In addition, because the marking device 10 can move smoothly in all directions without turning, it is also possible to move, for example, quickly towards the designated target marking position.

Specifically, in a case in which the traveling unit of the marking device does not have the omnidirectional traveling wheels, and in which, as shown in FIG. 8A, the traveling unit is a general traveling device that changes the moving direction of the marking device by steering front wheels arranged on the forward side of the marking device, in order to move the marking device towards the designated target marking position, it is required to steer the front wheels such that the marking device travels in a state in which "the forward side" of the marking device temporarily faces the target marking position, and thereafter, it is required to steer the front wheels again such that "the forward side" of the marking device is directed to the direction along the target marking position.

In other words, in a case in which the traveling unit of the marking device is a general traveling device, it is required to perform the maneuver to direct "the forward side" of the marking device towards the target, in other words, the maneuver of changing the orientation (the facing direction) of the marking device, and so, there is a risk in that it takes time to reach the target marking position or in that the marking unit cannot be positioned at the target marking position.

In contrast, because the rotation direction and rotation speed of each of the three omni wheels 13 of the traveling unit 12 are controlled by the control device 30 in an independent manner, as shown in FIG. 8B, the marking device 10 according to this embodiment can move towards the designated target marking position in a state in which the side defined as "the forward side" is always facing the same direction without changing the orientation (the facing direction), and thereby, the marking unit 18 can be positioned at the target marking position quickly. In addition, even when the position of the marking device 10 is deviated during the marking, the marking device 10 can be returned to the correct position quickly.

As described above, in the marking device 10, the rotation of each of the plurality of omni wheels 13 is controlled by the control device 30 such that the marking unit 18 is positioned at the preset target marking position without changing the orientation (the facing direction) of the marking device 10. In other words, in the process of moving towards the target marking position, because the marking device 10 does not turn to change its facing direction or perform a reversing maneuver to change its facing direction, the time required for the movement is reduced, and as a result, it is possible to perform the marking to the floor surface 1 efficiently. It should be noted that, a situation in which the marking device 10 is moved towards the target marking position includes, in addition to a case in which the marking for a predetermined location is completed and the marking device 10 is moved to a new target marking position, a case in which the marking device 10 is moved to be returned to the target marking position after the marking device 10 has been moved away from the target marking position due to some factor, for example.

Here, in order to improve the marking accuracy when the marking is performed at the target marking position by the marking unit 18 as described above, it is required to accurately align the position of the marking device 10, in particular, the position of the marking unit 18 with respect to the target marking position.

As a method for adjusting the position of the marking device 10 relative to the target marking position, as shown in FIG. 9A, one conceivable method is to rotationally drive, only when a difference is caused between the target marking position and the position of the marking unit 18, the first omni wheel 13A, which is the steerable wheel, by the electric motor 15 in a direction that eliminates the difference.

However, in an example shown in FIG. 9A, the rotation direction of the first omni wheel 13A is switched according to the direction in which the difference is caused. In general, a time lag is caused due to a backlash, etc. of the speed reducer when the rotation direction is switched, making it impossible to sufficiently reduce the difference between the position of the marking unit 18 and the target marking position, and as a result, there is a risk in that the marking accuracy is deteriorated.

In contrast, in this embodiment, as shown in FIG. 9B, regardless of whether or not the difference is caused between the target marking position and the position of the marking unit 18, the first omni wheel 13A, which is the steerable wheel, is always rotationally driven by the electric motor 15 in a predetermined rotation direction.

Specifically, as shown on the left side in FIG. 9B, in a state in which the position of the marking unit 18 coincides with the target marking position, the marking device 10 is controlled to travel in the orientation in which the position of the first omni wheel 13A, which is the steerable wheel, is positioned away from the target marking position by a predetermined distance. In other words, the marking device 10 is controlled to travel in the orientation in which "the forward side" of the marking device 10 is tilted in the horizontal direction relative to the traveling direction such that a predetermined tilted angle a is formed between the axial direction of the axle 14 of the first omni wheel 13A and the target marking position.

As described above, by controlling the marking device 10 to travel in a state in which "the forward side" of the marking device 10 is tilted relative to the traveling direction, it is possible to perform the adjustment of the position of the marking device 10 relative to the target marking position by changing only the rotation speed of the omni wheels 13 without changing the rotation direction of all of the omni wheels 13.

For example, in a case in which the position of the marking unit 18 is deviated from the target marking position in the direction, in which the tilted angle a is formed, the rotation speed of the first omni wheel 13A is increased, whereas in a case in which the position of the marking unit 18 is deviated from the target marking position in the opposite direction from the direction, in which the tilted angle a is formed, the rotation speed of the first omni wheel 13A is decreased (see FIG. 9B).

As described above, in an example shown in FIG. 9B, the rotation direction of the first omni wheel 13A is not switched, and the rotation speed of the first omni wheel 13A is adjusted in accordance with the direction in which the difference is caused. Therefore, the time lag due to switching of the rotation direction is not caused, and so, it becomes possible to improve the convergence of the position of the marking unit 18 to the target marking position. As a result, it is possible to accurately perform the marking to the target marking position by the marking unit 18.

In addition, in order to improve the marking accuracy to the target marking position by the marking unit 18, as shown in FIG. 10, the draw data may be offset according to the difference e between the three-dimensional spatial position of the target unit 20 measured by the three-dimensional measurement device 50 and the target position of the target unit 20 determined on the basis of the draw data.

Normally, the marking by the marking unit 18 is performed at near the center of the marking unit 18, and the draw data is also generated by the draw-data generation unit 35 on the assumption that the marking is performed at near the center of the marking unit 18. Therefore, in order to ensure the marking accuracy, it is required to align the center position of the marking unit 18 with the target marking position.

On the other hand, as described above, the marking unit 18 can perform the marking to the floor surface 1 within a predetermined markable width W1. In other words, as shown in FIG. 10, even in a case in which the center position of the marking unit 18 does not coincide with the target marking position, as long as the target marking position is within the markable width W1, it is possible to perform the marking to the target marking position.

Thus, for example, even in a case in which the rotation speed of the first omni wheel 13A, which is the steerable wheel, is being adjusted to cause the position of the marking unit 18 to approach the target marking position and the center position of the marking unit 18 has not yet coincided with the target marking position, it is possible to perform the marking to the target marking position by offsetting the draw data generated by the draw-data generation unit 35 by the difference e between the three-dimensional spatial position of the target unit 20 measured by the three-dimensional measurement device 50 and the target position of the target unit 20 determined on the basis of the draw data, and by performing the marking by the marking unit 18 on the basis of the offset draw data.

In addition to offsetting the draw data in accordance with the difference e in this way, as described above, the rotation speed of the first omni wheel 13A is adjusted in accordance with the direction in which the difference e is caused, and thereby, it is possible to accurately perform the marking to the target marking position.

While the marking is being performed by the marking device 10 by using the means to improve the marking accuracy and the marking efficiency as described above, in step S16, the control device 30 determines whether or not there is a possibility that the three-dimensional measurement device 50 and the traveling marking device 10 are disconnected due to an existing member, such as a partition wall, etc., entering between these devices.

As described above, because the three-dimensional measurement device 50 measures the three-dimensional spatial position of the marking device 10 by emitting the laser light to the traveling marking device 10, if the laser light is blocked by the partition wall, etc., it becomes impossible to measure the three-dimensional spatial position of the marking device 10, and as a result, it becomes impossible for the marking device 10 to continue the marking with high accuracy.

For this reason, while the marking is being performed by the marking device 10, the control device 30 constantly monitors whether or not there is a possibility that the existing member, such as the partition wall, etc., can come between the three-dimensional measurement device 50 and the marking device 10 on the basis of the design data, such as BIM, etc., that includes position data of the partition wall, etc. in the space, in which the marking operation is being performed, the current position of the three-dimensional measurement device 50, and the planned travel route of the marking device 10.

When it is determined that there is a possibility of disconnection between the devices in step S16, the control device 30 temporarily stop the marking performed by the marking device 10 in step S17.

In the subsequent step S18, the control device 30 controls the carriage unit 60 of the three-dimensional measurement device 50 such that the three-dimensional measurement device 50 is moved to the position at which there is no possibility that the existing member, such as the partition wall, etc., can come between the three-dimensional measurement device 50 and the marking device 10.

As described above, the three-dimensional measurement device 50 that has completed the movement and stopped automatically updates its own position in the space, in which the marking is to be performed, and becomes a state capable of measuring the three-dimensional spatial position of the target unit 20.

When it is confirmed that, as described above, a state in which the three-dimensional spatial position of the target unit 20 can be measured by the three-dimensional measurement device 50 is established, the process proceeds to step S 19, and the control device 30 starts the marking performed by the marking device 10 again.

It should be noted that, whether or not the existing member, such as the partition wall, etc., can come between the three-dimensional measurement device 50 and the marking device 10 can be predicted on the basis of the planned stopping position at which the three-dimensional measurement device 50 is to be stopped and the planned travel route of the marking device 10. Therefore, the movement of the three-dimensional measurement device 50 may be carried out in a planned manner, and for example, the three-dimensional measurement device 50 may be moved on the condition that the marking device 10 has reached a predetermined position along the planned travel route.

After the marking performed by the marking device 10 is resumed in step S19, or when it is determined that there is no possibility of disconnection between devices in step S16, the process proceeds to step S20, and the control device 30 determines whether or not all of the planned marking operation has been completed.

If all of the planned marking operation is completed, the process is terminated, and the marking device 10 enters a standby state until an instruction for the next operation is received from the server 120.

On the other hand, if the planned marking operation has not yet been completed, the process returns to step S16 and the marking operation is continued. Thereafter, the marking operation is carried out until the planned marking operation is completed through the above-described steps.

According to the embodiment mentioned above, the advantages described below are afforded.

In the automatic marking system 100 having the above-described configuration, the control device 30 controls the rotation of each of the plurality of omni wheels 13 (the omnidirectional traveling wheels) such that the marking unit 18 is positioned at the preset target marking position without changing the orientation (the facing direction) of the marking device 10. In addition, the control device 30 controls the marking unit 18 such that the marking is performed to the preset target marking position by the marking unit 18 of the moving marking device 10 and controls the rotation of each of the plurality of omni wheels 13 (the omnidirectional traveling wheels) such that the marking device 10 travels along the target marking position without changing its facing direction.

The traveling unit 12 of the marking device 10 has the configuration in which the plurality of omni wheels 13 are provided, and the marking device 10 can move smoothly in all directions without turning. Therefore, even if there is a portion that bends at an acute angle or an obtuse angle at the target marking position, the marking device 10 can perform the marking by traveling in, for example, a state in which the side defined as "the forward side" is always facing the same direction without performing any turning or reversing maneuvers. In addition, even if the marking device 10 moves towards the designated target marking position, the marking device 10 travels in a state in which the side defined as "the forward side" is always facing the same direction and can quickly position the marking unit 18 relative to the preset target marking position.

As described above, in the marking device 10, the rotation of each of the plurality of omni wheels 13 is controlled by the control device 30 such that the marking device 10 can travel along the target marking position without changing the facing direction thereof. In other words, in the process of performing the marking and in the process of moving, because the marking device 10 does not turn to change its facing direction or perform a reversing maneuver to change its facing direction, the time required for the marking operation is reduced, and as a result, it is possible to automatically perform the marking to the floor surface 1 efficiently.

It should be noted that, following modifications are also within the scope of the present invention, and it is also possible to combine the configurations shown in the modification with the configurations described in the above-described embodiment, and to combine the configurations described in the following different modifications.

In the above-mentioned embodiment, the three-dimensional spatial position of the single marking device 10 is measured by the single three-dimensional measurement device 50. Instead of this configuration, the three-dimensional measurement device 50 may measure the three-dimensional spatial positions of a plurality of the marking devices 10. When the three-dimensional spatial positions of the plurality of the marking devices 10 are measured by the single three-dimensional measurement device 50 as described above, while the three-dimensional spatial position of any one of the marking devices 10 is being measured, the three-dimensional spatial positions of other marking devices 10 are not measured temporarily. However, because the marking device 10 includes the inertial measurement unit (IMU) as the orientation detection unit 26, even during the time when its three-dimensional spatial position is not being measured, the marking device 10 can travel along the target marking position by means of the Dead Reckoning (DR) and perform the marking.

Embodiments of the present invention were described above, but the above embodiments are merely examples of applications of the present invention, and the technical scope of the present invention is not limited to the specific constitutions of the above embodiments.

This application claims priority based on Japanese Patent Application No. 2022-181226 filed with the Japan Patent Office on November 11, 2022, the entire contents of which are incorporated into this specification by reference.

## Claims

1. An automatic marking system comprising:
a marking device configured to perform a marking to a marking surface while moving;
a three-dimensional measurement device capable of tracking the marking device and measuring a three-dimensional spatial position of the marking device; and
a control device configured to control traveling and the marking by the marking device based on the three-dimensional spatial position of the marking device measured by the three-dimensional measurement device, wherein
the marking device has:
a traveling unit capable of traveling on the marking surface;
a marking unit configured to perform the marking to the marking surface; and
a target unit configured to be tracked by the three-dimensional measurement device,
the traveling unit has a plurality of omnidirectional traveling wheels whose rotation direction and rotation speed are controlled independently, and
the control device is configured to control rotation of each of the plurality of the omnidirectional traveling wheels such that the marking unit is positioned at a preset target marking position without changing a facing direction of the marking device.

2. The automatic marking system according to Claim 1, wherein the control device is configured to perform an adjustment of a position of the marking device relative to the target marking position by changing the rotation speed of the plurality of the omnidirectional traveling wheels without changing the rotation direction of the omnidirectional traveling wheels.

3. The automatic marking system according to Claim 1 or 2, wherein
the plurality of the omnidirectional traveling wheels are three omni wheels arranged such that axial directions of respective axles are pointed to a common center point.

4. The automatic marking system according to Claim 1 or 2, wherein
the three-dimensional measurement device has:
an optical measuring unit configured to optically measure a distance to the target unit; and
a carriage unit capable of moving on the marking surface, and
the control device is configured to control the carriage unit to move the three-dimensional measurement device such that a member blocking light does not come between the optical measuring unit and the target unit.

5. The automatic marking system according to Claim 1 or 2, wherein
the control device has a draw-data generation unit configured to generate draw data from design data,
when the design data includes a zigzag line, the draw-data generation unit is configured to extend each of two line segments forming the zigzag line at a bend point and to convert the bend point to an intersection point at which the two line segments intersect.

6. The automatic marking system according to Claim 1 or 2, wherein
the control device has:
a draw-data generation unit configured to generate draw data from design data; and
a marking position setting unit configured to set the target marking position based on the draw data,
the draw-data generation unit is configured to offset the draw data in accordance with a difference between a position of the target unit measured by the three-dimensional measurement device and a target position of the target unit determined based on the draw data in advance, and
the marking position setting unit is configured to set the target marking position based on the offset draw data.

7. The automatic marking system according to Claim 1 or 2, wherein
the control device has an orientation recognition unit configured to recognize an orientation of the marking device,
the orientation recognition unit is configured to: move the marking device in a preset direction after receiving the position of the target unit measured by the three-dimensional measurement device by the orientation recognition unit; and recognize the orientation of the marking device based on the position of the target unit received before the movement of the marking device and the position of the target unit received after the movement of the marking device.

8. An automatic marking method performed by an automatic marking system comprising: a marking device configured to perform a marking to a marking surface while moving; a three-dimensional measurement device capable of tracking the marking device and measuring a three-dimensional spatial position of the marking device; and a control device configured to control traveling and the marking by the marking device based on the three-dimensional spatial position of the marking device measured by the three-dimensional measurement device, the method comprising
moving the marking device such that a marking unit of the marking device is positioned at a preset target marking position without changing a facing direction of the marking device by controlling a traveling unit of the marking device having a plurality of omnidirectional traveling wheels whose rotation direction and rotation speed are controlled independently.

9. The automatic marking method according to Claim 8, wherein
an adjustment of a position of the marking device relative to the target marking position is performed by changing the rotation speed of the plurality of the omnidirectional traveling wheels without changing the rotation direction of the omnidirectional traveling wheels.

10. The automatic marking method according to Claim 8 or 9, wherein
the plurality of the omnidirectional traveling wheels are three omni wheels arranged such that axial directions of respective axles are pointed to a common center point.
